# EUROPÄISCHE PATENTSCHRIFT

(11) **EP 1 654 607 B1**
(45) Veröffentlichungstag und Bekanntmachung des Hinweises auf die Patenterteilung: **21.03.2007**
(21) Anmeldenummer: 04740760.6
(22) Anmeldetag: 08.07.2004
(51) Int. Cl.: G05G 1/14, B60K 26/02, B60T 7/06

(54) **PEDALLAGERBOCK**
PEDAL BEARING BLOCK
SUPPORT DE PALIER POUR PEDALE

(30) Priorität: 09.07.2003 DE 10330893
(43) Veröffentlichungstag der Anmeldung: 10.05.2006
(73) Patentinhaber: DaimlerChrysler AG, 70567 Stuttgart (DE)
(72) Erfinder: PLAGMANN, Matthias, 22453 Hamburg (DE); REESE, Eckhard, 21641 Apensen (DE)
(74) Vertreter: Thoms, Frank
(86) Internationale Anmeldenummer: PCT/EP2004/007449
(87) Internationale Veröffentlichungsnummer: WO 2005/006104

(56) Entgegenhaltungen:
- EP-A- 0 889 384
- EP-A- 1 052 562
- WO-A-00/35727
- DE-A- 4 326 183
- DE-A- 10 225 166

## Beschreibung

Die Erfindung betrifft einen Pedallagerbock nach dem Oberbegriff des Patentanspruchs 1.

Aus der DE 100 17 794 A1 ist ein Pedallagerbock bekannt, der einteilig ausgebildet ist. Bei einer einteiligen Ausführung eines Pedallagerbocks kann nur ein Werkstoff verwendet werden. Ein Pedallagerbock aus Kunststoff benötigt viel Bauraum, um die notwendige Steifigkeit zu erreichen. Dagegen weist ein kompakter Pedallagerbock aus Metall ein hohes Gewicht auf. Bei der Verwendung von Leichtmetallen wird zwar das Gewicht reduziert, dabei entstehen aber hohe Materialkosten.

Aus der EP 1 052 562 A3 ist ein Pedallagerbock zur Aufnahme eines Pedals für ein Kraftfahrzeug mit einem Grundköper bekannt. Der Grundkörper besteht aus einer Schale und einem der Schale zugeordneten Verstärkungselement.

Vor diesem Hintergrund liegt der vorliegenden Erfindung die Aufgabe zugrunde, einen Pedallagerbock der eingangs genannten Art zu schaffen, welcher mit einem geringen Gewicht und kostengünstig herzustellen ist und dabei wenig Bauraum benötigt.

Diese Aufgabe wird durch einen Pedallagerbock mit den Merkmalen des Anspruchs 1 gelöst. Demnach zeichnet sich der Pedallagerbock durch einen Grundkörper mit zwei separaten Bauteilen auf, einer Schale und einem Verstärkungselement. Das Verstärkungselement besitzt eine versteifende Funktion. Durch die mehrteilige Ausführung des Grundkörpers können die Schale und das Verstärkungselement aus verschiedenen Materialien ausgebildet sein, wobei die positiven Eigenschaften der einzelnen Werkstoffe miteinander kombiniert werden können. Kunststoff weist beispielsweise ein geringes Gewicht auf und Metall eine hohe Stabilität. Dadurch können bei einer kompakten Bauweise des Pedallagerbocks, gleichzeitig die Steifigkeit erhöht und das Gewicht reduziert werden.

Um dem Grundkörper eine Grundstabilität zu geben, besteht dieser aus Metall, wie beispielsweise Stahlblech. Stahl ermöglicht bei einer kompakten Bauweise eine höhere Festigkeit als ein Bauteil mit gleichen Abmessungen aus Kunststoff.

Um die Steifigkeit der Schale weiter zu erhöhen, weist die Schale gemäß einer Ausführungsform an ihrem umlaufenden Rand einen Kragen auf. Wenn im Zusammenhang mit der Erfindung von einem Kragen die Rede ist, so ist damit eine im wesentlichen rechtwinklig abgewinkelte Außenkante der Schale gemeint. Durch diesen Kragen wird außerdem der Kraftfluß in dem Pedallagerbock optimiert. Eine über ein Pedal in den Pedallagerbock eingeleitete Kraft wird über den Kragen auf eine große Fläche verteilt, wodurch einzelne Bereiche des Pedallagerbocks entlastet werden.

Für die darüber hinaus benötigte Stabilität der Schale ist an der Schale ein zusätzliches Verstärkungselement aus Kunststoff angespritzt. Kunststoffteile haben den Vorteil, daß sie im Vergleich zu Metallteilen mit identischen Abmessungen ein geringeres Gewicht aufweisen und kostengünstiger herzustellen sind. Desweiteren können die Kunststoffteile einfach durch Spritzgußverfahren an die Schale des Grundkörpers angespritzt werden. Hierbei ist keine aufwendige Anpassung des Kunststoffteils an die Schale nötig, da sich das Kunststoffteil beim Spritzvorgang automatisch an die Schale, die einen Teil der Spritzgußform bildet, angleicht. Daher müssen keine Toleranzen beachtet werden, was die Herstellung erheblich günstiger bezüglich der Kosten macht.

Alternativ zum herkömmlichen Spritzgußverfahren ist es auch denkbar, eine Schaumspritzguß-Technologie zur Herstellung des Kunststoffteils beziehungsweise Verstärkungselements zu verwenden. Zentrales Element des Verfahrens ist eine Gasversorgungseinheit. Ein Treibmittel, beispielsweise NO₂, wird unter einem Druck von 100 bis 200 bar in eine Kunststoffschmelze injiziert. Das Treibmittel löst sich in der Kunststoffschmelze auf und entspannt sich beim Einspritzen, wobei es den Kunststoff aufschäumt. Man erhält somit eine mikrozelluläre Strukturen.

Das Schaumspritzgießen ermöglicht im Vergleich zum herkömmlichen Spritzgießen eine homogene Struktur, geringen Verzug und die Ausformung dünnwandiger Bereiche. Zusätzlich bietet dieses Verfahren eine Gewichtseinsparung bis zu 30 %, da gewichtsspezifisch bessere mechanische Eigenschaften erreicht werden. Aufgrund systemeigener Eigenschaften, wie kleinere Halte-, Kühl- und Zykluszeiten, Reduzierung der Maschinengröße durch geringeres Druckniveau, Verbesserung der Schmelzviskosität und Verringerung von Ausschuß, werden Kostensenkungen erzielt. Positiv sind ebenfalls die mögliche Nachrüstung konventioneller Maschinen und die Benutzung der Standardspritzwerkzeuge hervorzuheben. Das Schaumspritzgussverfahren eignet sich für bekannte Kunststoffe, insbesondere für PA, PP, POM, TPE/PP.

Aufgrund der angeführten Vorteile eignet sich das Schaumspritzgießen hervorragend zur Kombination mit der Hybridtechnologie zur Unterstützung des Leichtbaus.

Um das Verstärkungselement möglichst kostengünstig herzustellen, weist das Verstärkungselement im Innern der Metallschale gemäß einer weiteren Ausführungsform eine Rippenstruktur auf. Dadurch wird bei gewünschter Stabilität auf einfache Art Material und Gewicht eingespart und damit die Kosten reduziert.

Eine Lagerstelle ist für ein Pedallager in die Schale und dem sowohl außen als auch innen an die Schale angespritzten Verstärkungselement eingebracht. Da in die Lagerstelle durch ein Pedal große Kräfte eingeleitet werden, muß die Lagerstelle eine hohe Festigkeit aufweisen. Durch den mehrteiligen sandwichartigen Aufbau der Lagerstelle ist es möglich, der Lagerstelle eine Grundstabilität durch einen Metallkern, der der Schale entspricht, zu geben. Das Verstärkungselement hat die Aufgabe, das eigentliche Pedallager zu formen.

Die Lagerstelle weist zur Verstärkung gemäß einer weiteren Ausführungsform axial und radial zur Pedallagerlängsachse angeordnete Rippen auf. Rippen haben den Vorteil, daß sie bei optimaler Verstärkung sowohl Material als auch Gewicht einsparen. Dadurch werden die Kosten weiter reduziert.

Gemäß einer weiteren Ausführungsform sind die beiden Teile des Grundkörpers fest miteinander verbunden. Der Kragen der Schale wird dazu zumindest teilweise mit Kunststoff umspritzt, so daß das Verstärkungselement an der Schale verankert ist. Desweiteren weist die Schale Durchsetzungslöcher in Form von Ausnehmungen in der Schale Gemäß einer weiteren Ausführungsform sind die beiden Teile des Grundkörpers fest miteinander verbunden. Der Kragen der Schale wird dazu zumindest teilweise mit Kunststoff umspritzt, so daß das Verstärkungselement an der Schale verankert ist. Desweiteren weist die Schale Durchsetzungslöcher in Fom von Ausnehmungen in der Schale auf, in die der Kunststoff des Verstärkungselements hineingespritzt ist. Dadurch wird das angespritzte Verstärkungselement ebenfalls an der Schale fixiert. Dies ist eine einfache und kostengünstige Art der Befestigung, da weder zusätzlichen Befestigungselemente benötigt werden noch zusätzliche Arbeitsschritte notwendig sind.

Damit der Pedallagerbock verschiedene Zusatzelemente aufnehmen kann, sind gemäß einer weiteren Ausführungsform Befestigungsmöglichkeiten an dem Verstärkungselement vorgesehen. Diese Befestigungsmöglichkeiten sind durch ein entsprechendes Anpassen der Spritzgußformen einfach herzustellen und einfach mit dem Pedallagerbock zu verbinden. Dabei werden keine zusätzlichen Befestigungsmittel benötigt.

Im folgenden wird der erfindungsgemäße Pedallagerbock anhand der in der Zeichnung dargestellten Ausführungsbeispiele näher erläutert. Es zeigen:
- Fig. 1: eine perspektivische Ansicht einer ersten Ausführungsform einer Schale eines erfindungsgemäßen Pedallagerbocks;
- Fig. 2a: eine perspektivische Vorderansicht des erfindungsgemäßen Pedallagerbocks mit der Schale gemäß Fig. 1;
- Fig. 2b: eine perspektivische Rückansicht des erfindungsgemäßen Pedallagerbocks gemäß Fig. 2a;
- Fig. 3: eine perspektivische Ansicht einer zweiten Ausführungsform einer Schale des erfindungsgemäßen Pedallagerbocks sowie
- Fig. 4: eine perspektivische Ansicht des erfindungsgemäßen Pedallagerbocks mit der Schale gemäß Fig. 3.

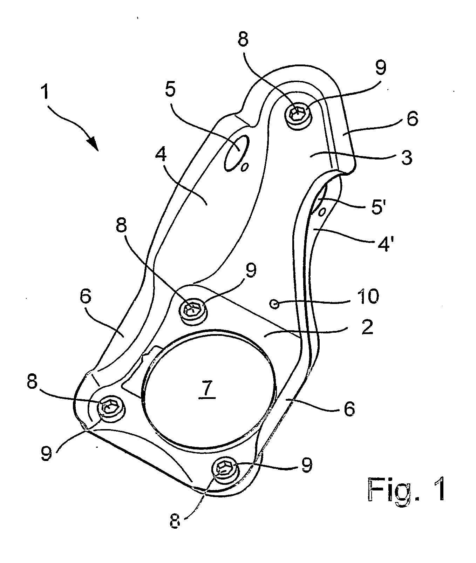

In Fig. 1 ist eine Schale 1 aus Metall dargestellt, die einen Teil eines Grundkörpers des erfindungsgemäßen Pedallagerbocks bildet. Die Schale 1 besteht aus einem tiefgezogenem Stahlblech und weist einen flachen Boden 2, einen gewölbten Boden 3 und zwei Seitenwände 4, 4' auf. Der flache Boden 2 und der gewölbte Boden 3 sind nebeneinander angeordnet, so daß der gewölbte Boden 3 in der Fig. 1 oberhalb des flachen Bodens 2 angeordnet ist. Der gewölbte Boden 3 ist von den Seitenwänden 4, 4' sowohl seitlich als auch oben umschlossen. Der flache Boden 2 ist nur seitlich von den Seitenwänden 4, 4' umgeben. Durch die Seitenwände 4, 4' bildet die Schale 1 einen Innenraum. In den Seitenwänden 4, 4' sind im Bereich des gewölbten Bodens zwei Bohrungen 5, 5' zur Aufnahme eines Pedallagers angeordnet. Ein umlaufender Rand 6 der Schale 1 ist an den Seitenwänden 4, 4' und oberhalb des Lagerbereichs rechtwinklig abgewinkelt. Der flache Boden 2 ist rechwinklig geformt und weist zentral eine große kreisförmige Ausnehmung 7 auf, durch die ein nicht weiter dargestelltes Übertragungselement geführt wird. Das Übertragungselement leitet eine Bewegung eines Bremspedals auf eine nicht dargestellte Bremseinheit weiter. Desweiteren sind in dem flachen Boden 2 umfangsseitig um die Ausnehmung 7 drei weitere kleine kreisförmige Ausnehmungen 8 angeordnet, in die Buchsen 9 eingepreßt sind. Die Schale 1 wird mit dem flachen Boden 2 an einer Stirnwand eines Fahrzeugs befestigt. Die Buchsen 9 dienen zur Aufnahme von Befestigungselementen zur Anbindung der Schale 1 an die Stirnwand. Eine weitere Ausnehmung 8 mit eingepreßter Buchse 9 zur Anbindung der Schale 1 an die Stirnwand befindet sich im gewölbten Boden 3 oberhalb der Aufnahme für das Pedallager.

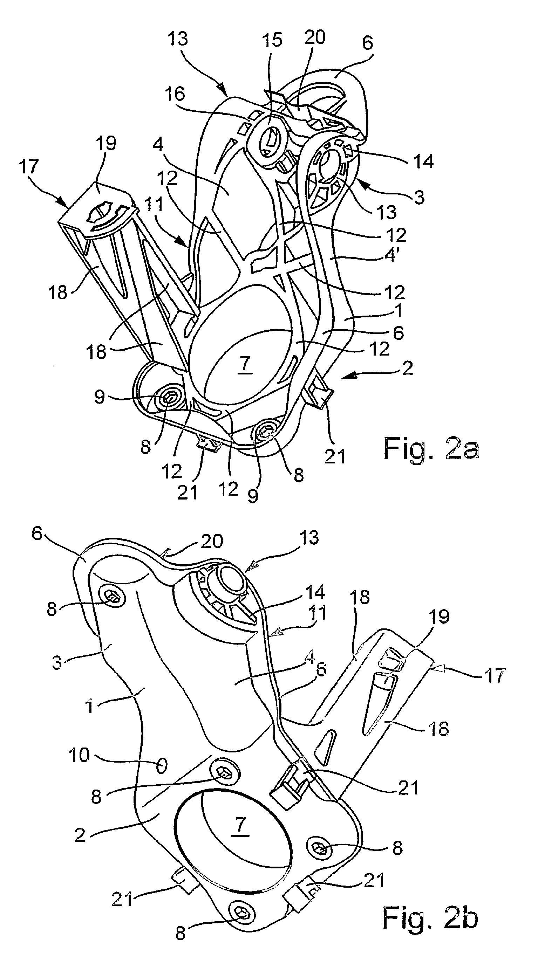

Im Übergangsbereich von dem flachen Boden 2 zu dem gewölbten Boden 3 ist ein Durchsetzungsloch 10 in Form einer kreisförmigen Ausnehmung angeordnet, welches zur Verankerung eines Verstärkungselements 11 an der Schale dient. Das Verstärkungselement 11 ist in den Fig. 2a und 2b näher erläutert. Das Verstärkungselement 11 wird in den Innenraum der Schale 1 hineingespritzt. Dabei dringt das Material des Verstärkungselements 11 durch das Durchsetzungsloch 10 der Schale 1 hindurch und fixiert dadurch das Verstärkungs-element 11 an der Schale 1.

Aus den Fig. 2a und 2b geht ein erfindungsgemäßer mehrteiliger Pedallagerbock hervor. Der Pedallagerbock weist eine Schale 1, wie sie in Fig. 1 dargestellt ist, und ein Verstärkungselement 11 auf. Das Verstärkungselement 11 besteht aus Kunststoff, wie beispielsweise PA6 GF 30 %, und ist rippenförmig zur Erhöhung der Steifigkeit der Schale 1 in den Innenraum der Schale 1 gespritzt, wobei die Ausnehmung 7 der Schale 1 frei bleibt. Sowohl der angestellte Rand 6 als auch die Buchsen 9 sind mit dem Kunststoff des Verstärkungselements 11 umspritzt. Dadurch wird das Verstärkungselement 11 fest mit der Schale 1 verbunden. Der flache Boden 2 ist im Bereich der Buchsen 9 vollständig mit Kunststoff bedeckt. Die Buchsen 9 ragen aus dem mit Kunststoff bedeckten Boden heraus und sind an ihrer Außenseite zusätzlich ringförmig mit Kunststoff verstärkt, so daß die Buchsen 9 und ein um die Buchsen 9 angeordneter Ring eine bündig abschließende Oberfläche aufweisen.

Das Verstärkungselement 11 weist Rippen 12 auf, die unregelmäßig im Bereich des gewölbten Bodens 3 im Innenraum der Schale 1 verlaufen. So verläuft eine Rippe 12 beispielsweise von der Seitenwand 4 zur Ausnehmung 7, eine zweite Rippe 12 von der gegenüberliegenden Seitenwand 4' zur Ausnehmung 7 und eine dritte Rippe 12 verläuft zwischen den beiden Seitenwänden 4, 4' und kreuzt dabei eine der vorher genannten Rippen 12. Die Rippen 12 erstrecken sich in der Tiefe vom Rand 6 der Schale 1 bis zu dem gewölbten Boden 3. Im Bereich des flachen Bodens 2 bilden die Rippen 12 des Verstärkungselements 11 Tangenten um die Ausnehmung 7 der Schale 1.

An den Seitenwänden 4, 4' im Bereich der Bohrungen 5, 5' bildet das Verstärkungselement 11 Lagerstellen 13 für ein Pedallager. Die Lagerstellen 13 sind außen und innen an die Seitenwände 4, 4' angespritzt. Die Lagerstellen 13 haben die Form einer Hülse, die durch die Bohrungen 5, 5' in den Seitenwänden 4, 4' hindurchragen. Ein nach außen ragender Teil der Hülse ist durch Rippen 14 verstärkt, die jeweils zwischen der Hülse und dem am nächsten gelegenen Rand 6 der Schale 1 radial zu einer Pedallagerlängsachse angeordnet sind. Die Lagerstelle 13 an der Seitenwand 4 ist im Innenraum der Schale 1 zusätzlich mit einer ringförmigen Platte 15 verstärkt. Die Platte 15 ist mit axial zur Pedallagerlängsachse angeordneten Verstärkungsrippen 16 an die hülsenförmige Lagerstelle 13 angebunden. Diese Lagerstelle 13 an der Seitenwand 4 ist in dieser Ausführungsform aufgrund des vorhandenen Bauraums breiter als die ihr gegenüberliegende Lagerstelle 13 an der Seitenwand 4' gemäß Fig. 2a. Es ist aber auch denkbar, die beiden Lagerstellen 13 gleich zu dimensionieren.

Zwischen der Ausnehmung 7 im flachen Boden 2 und der Seitenwand 4 ist ein Halter 17 zur Aufnahme eines Lichtschalters an das Verstärkungselement 11 angespritzt. Der Halter 17 besteht aus zwei seitlichen Streben 18, die im rechten Winkel zueinander angeordnet sind und mit einer Aufnahmeplatte 19 abgedeckt sind. Eine dritte Strebe 18 verläuft diagonal von der Schale 1 zur Aufnahmeplatte 19 und verbindet die beiden seitlichen Streben 18 miteinander. Die Aufnahmeplatte 19 des Halters 17 weist eine Bohrung zur Fixierung des Lichtschalters mit einer rechteckigen Mitnehmeraussparung auf.

Desweiteren ist oberhalb der Lagerstellen 13 für das Pedallager eine an das Verstärkungselement 11 angespritzte Kunststofffläche 20 angeordnet. Die Kunststofffläche 20 verläuft über die gesamte Breite des Grundkörpers und dient der Abdeckung einer nicht dargestellten Geräuschkapsel, die auf den Pedallagerbock auf der Seite des Verstärkungselements 11 aufgesetzt wird. Die Geräuschkapsel wird mittels drei Rastnasen 21 mit dem Pedallagerbock verbunden. Die Rastnasen 21 sind umfangsseitig um die Ausnehmung 7 unterhalb des mit Kunststoff umspritzten Rands 6 außen an der Schale 1 angespritzt.

Eine der Buchsen 9 neben der Ausnehmung 7 der Schale 1 ragt ein wenig aus der Schale 1 in Richtung Stirnwand heraus und dient als Anbindungspunkt für beispielsweise einen Crashabweiser.

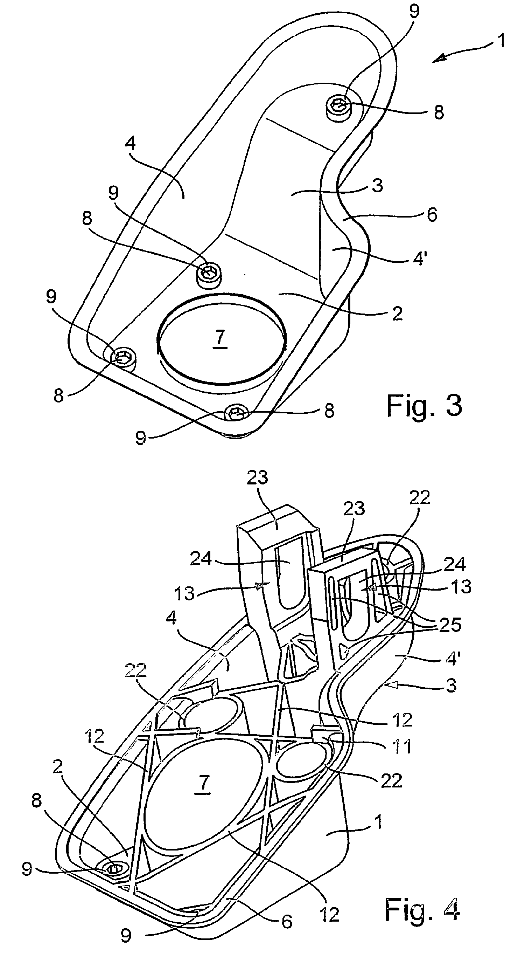

In Fig. 3 ist ein weiteres Ausführungsbeispiel einer Schale 1 des erfindungsgemäßen Pedallagerbocks dargestellt. Die Schale 1 weist im Unterschied zu der in Fig. 1 dargestellten Schale 1 umfangsseitig um die beiden Böden 2, 3 herum angeordnete Seitenwände 4, 4' auf. An den Seitenwänden 4, 4' ist ein durchgehender nach außen angestellten Rand 6 vorgesehen. Desweiteren sind in den Seitenwänden 4, 4' der Metallschale 1 keine Ausnehmungen für Lagerstellen 13 vorgesehen. Die Lagerstellen 13 werden mit dem Verstärkungselement 11 aus Kunststoff an die Schale 1 angespritzt. Dies ist im Zusammenhang mit dem in Fig. 4 dargestellten Ausführungsbeispiel erläutert.

Aus Fig. 4 geht eine weitere Ausführungsform eines Pedallagerbocks hervor. An die Schale 1 gemäß Fig. 3 ist ein Verstärkungselement 11 angespritzt. Das Verstärkungselement 11 weist zusätzlich zu den im Innenraum der Schale 1 verlaufenden Rippen 12 im Bereich des flachen Bodens 2 hohlzylinderförmige Verstärkungen 22 auf, welcher mit ihrer Längsachse senkrecht zu dem flachen Boden 2 ausgerichtet sind. Die Verstärkungen 22 grenzen an die mit Kunststoff hohlzylinderförmig umspritzte Ausnehmung 7. Eine weitere hohlzylinderförmige Verstärkung 22 ist im Bereich des gewölbten Bodens 3 oberhalb der Aufnahme für das Pedallager angeordnet. Im Unterschied zu dem in den Fig. 2a und 2b dargestellten Ausführungsbeispiel des Pedallagerbocks bestehen die Lagerstellen 13 aus Kunststoff. Sie sind in Anformungen eingebracht, die oberhalb der Seitenwände 4, 4' an das Verstärkungselement 11 angespritzt sind. Die Anformungen 23 sind im wesentlichen quaderförmig und weisen an ihren großen Seitenfläche jeweils eine zentrale Aussparung 24 in Form eines Langlochs auf. Die Langlöcher dienen als Freiräume für Hebel und sind dementsprechend ausgeformt. Die quaderförmigen Anformungen 23 weisen an ihrer Außenseite zudem Materialaussparungen 25 zur Einsparung von Material und Gewicht auf.

## Patentansprüche

1. Pedallagerbock zur Aufnahme eines Pedals für ein Kraftfahrzeug mit
- einem Grundkörper, der eine Schale (1) und ein der Schale (1) zugeordnetes Verstärkungselement (11) aufweist,
- einer Verbindungsstelle zur Befestigung des Pedallagerbocks an einer Stirnwand und
- einer Lagerstelle zur Aufnahme eines Pedallagers,
**dadurch gekennzeichnet,**
**dass** die Schale (1) aus Metall und das Verstärkungselement (11) aus Kunststoff besteht, wobei die Lagerstelle (13) durch das Verstärkungselement (11) und die Schale (1) gebildet ist.

2. Pedallagerbock nach Anspruch 1,
**dadurch gekennzeichnet,**
**daß** die Schale (1) einen bereichsweise umlaufenden Rand (6) aufweist.

3. Pedallagerbock nach Anspruch 1 oder 2,
**dadurch gekennzeichnet,**
**daß** das Verstärkungselement (11) Rippen (12) aufweist.

4. Pedallagerbock nach Anspruch 1,
**dadurch gekennzeichnet,**
**daß** das Verstärkungselement (11) um die Lagerstelle (13) des Pedallagers Rippen (14) aufweist.

5. Pedallagerbock nach Anspruch 1,
**dadurch gekennzeichnet,**
**daß** das Verstärkungselement (11) an der Schale (1) verankert ist.

6. Pedallagerbock nach einem der vorhergehenden Ansprüche,
**dadurch gekennzeichnet,**
**daß** das Verstärkungselement (11) den umlaufenden Rand (6) der Schale (1) im wesentlichen umhüllt.

7. Pedallagerbock nach einem der vorhergehenden Ansprüche,
**dadurch gekennzeichnet,**
**daß** das Verstärkungselement (11) Aufnahmeelemente (17, 20, 21, 23) zur Aufnahme von Funktionselementen aufweist.

## Claims

1. A pedal bearing block for receiving a pedal for a motor vehicle, with
- a basic body which has a shell (1) and a reinforcing element (11) assigned to the shell (1),
- a connecting point for fastening the pedal bearing block to a front wall, and
- a bearing point for receiving a pedal bearing,
**characterized in that** the shell (1) consists of metal and the reinforcing element (11) consists of plastic, with the bearing point (13) being formed by the reinforcing element (11) and the shell (1).

2. The pedal bearing block as claimed in claim 1, **characterized in that** the shell (1) has an edge (6) encircling it in some regions.

3. The pedal bearing block as claimed in claim 1 or 2, **characterized in that** the reinforcing element (11) has ribs (12).

4. The pedal bearing block as claimed in claim 1, **characterized in that** the reinforcing element (11) has ribs (14) around the bearing point (13) of the pedal bearing.

5. The pedal bearing block as claimed in claim 1, **characterized in that** the reinforcing element (11) is secured on the shell (1).

6. The pedal bearing block as claimed in one of the preceding claims, **characterized in that** the reinforcing element (11) substantially envelopes the encircling edge (6) of the shell (1).

7. The pedal bearing block as claimed in one of the preceding claims, **characterized in that** the reinforcing element (11) has receiving elements (17, 20, 21, 23) for receiving functional elements.

## Revendications

1. Support de palier pour pédale destiné à recevoir une pédale pour un véhicule automobile, comprenant
- un corps de base, qui présente une coque (1) et un élément de renforcement (11) associé à la coque (1),
- un point de connexion pour la fixation du support de palier pour pédale contre une paroi frontale et
- un point d'appui pour recevoir un palier de pédale,
**caractérisé en ce que**
la coque (1) est en métal et l'élément de renforcement (11) est en plastique, le point d'appui (13) étant formé par l'élément de renforcement (11) et la coque (1).

2. Support de palier pour pédale selon la revendication 1,
**caractérisé en ce que**
la coque (1) présente un bord périphérique partiel (6).

3. Support de palier pour pédale selon la revendication 1 ou 2,
**caractérisé en ce que**
l'élément de renforcement (11) présente des nervures (12).

4. Support de palier pour pédale selon la revendication 1,
**caractérisé en ce que**
l'élément de renforcement (11) présente des nervures (14) autour du point d'appui (13) du palier de pédale.

5. Support de palier pour pédale selon la revendication 1,
**caractérisé en ce que**
l'élément de renforcement (11) est ancré sur la coque (1).

6. Support de palier pour pédale selon l'une quelconque des revendications précédentes,
**caractérisé en ce que**
l'élément de renforcement (11) enveloppe sensiblement le bord périphérique (6) de la coque (1).

7. Support de palier pour pédale selon l'une quelconque des revendications précédentes,
**caractérisé en ce que**
l'élément de renforcement (11) présente des éléments de réception (17, 20, 21, 23) pour recevoir des éléments fonctionnels.
